# DEMANDE DE BREVET EUROPEEN

(11) **EP 1 166 618 A1**
(43) Date de publication de la demande: **02.01.2002**
(21) Numéro de dépôt: 00460038.3
(22) Date de dépôt: 27.06.2000
(51) Int. Cl.: A01F 25/16, A01F 25/13

(54) **Enrouleur derouleur de film de protection sur silo couloir**

(71) Demandeur: Gilbert, Duhamel, 53150 La Chapelle Rainsouin (FR)
(72) Inventeur: Gilbert, Duhamel, 53150 La Chapelle Rainsouin (FR)

(57) **Abrégé**

Dispositif pour couvrir et découvrir les silos d'ensilage, maïs, herbe pour bovins.

L'invention concerne l'enroulement des bâches qui recouvre les silos (1) et le déroulement des bâches le plus vite possible sans fatigue, une fois le silo plein

Il est constitué d'un panier (2) de stockage, d'un gros tube (3) avec un grand volant (4) d'un petit tube (5) et un petit volant (6). Ce mécanisme enroule et déroule le film plastique (bâche) et la seconde bâche épaisse lourde et fibreuse (8) Sur l'ensilage au dessus des silos.

Le dispositif selon l'invention est particulièrement destiné à l'enroulement et au déroulement des bâches de protection sur les silos d'ensilage.

## Description

La présente invention concerne un dispositif pour protéger les stocks de nourriture en silos pour bovin (maïs, herbe).

Traditionnellement, les silos sont recouverts d'une bâche plastique noire et de plusieurs centaines de pneus de voitures ou camions pour empêcher la bâche plastique de se soulever au vent et de laisser passer l'air qui ferait pourrir la nourriture.

Ces silos que l'on retrouve dans toutes les fermes d'élevages, nécessitent beaucoup de fatigues, de la perte de nourriture et de la manipulation de vieux pneus sales plusieurs fois.

Le dispositif selon l'invention permet de remédier ces inconvénients, il comporte une bâche plastique, protégée et alourdie par une seconde bâche fibreuse, épaisse et lourde. Ces deux bâches solidaires sont déroulées sur la nourriture dans moins d'une heure et ainsi rend le silo étanche.
Le système de déroulage est constitué de deux tubes souples de section
différente, l'un intérieur, l'autre extérieur, inséré l'un dans l'autre et solidarisé à une extrémité. Munis à chacune des deux autres extrémités d'un moyen de mise en rotation (par exemple : volant qui permet l'enroulement des deux bâches).

L'enceinte, qui reçoit le maïs à protéger, est constituée de trois murs formant un U avec des murs béton sur lequel le système de protection vient se dérouler ou s'enrouler.

Selon l'invention, c'est à l'ouverture du silo que le travail est facilité. Au déroulement des bâches, le système reste en attente au départ du silo pour que le jour de l'ouverture par retour inverse, l'enroulement des deux bâches s'effectue autour d'un tube souple (16 cm de diamètre) en plastique et d'un grand volant d'un diamètre de (150 centimètres) multipliant la force d'enroulement sans fatigue.

Les deux murs parallèles servent à d'appui pour la structure tubulaire au niveau du remplissage du silo fini et permet le déroulement du système de protection, film plastique et de l'autre bâche épaisse et lourde.

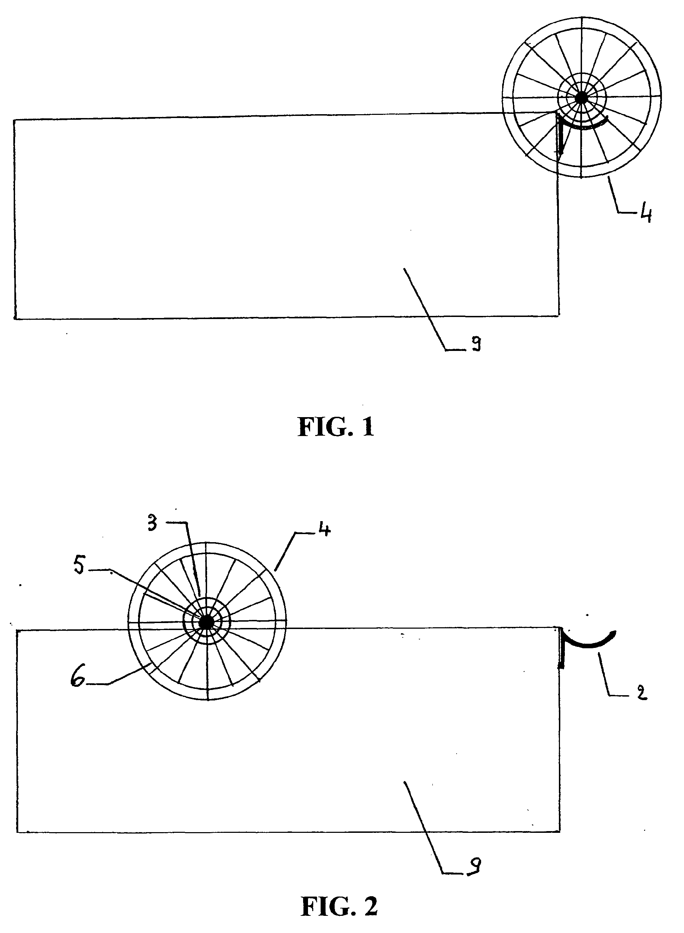

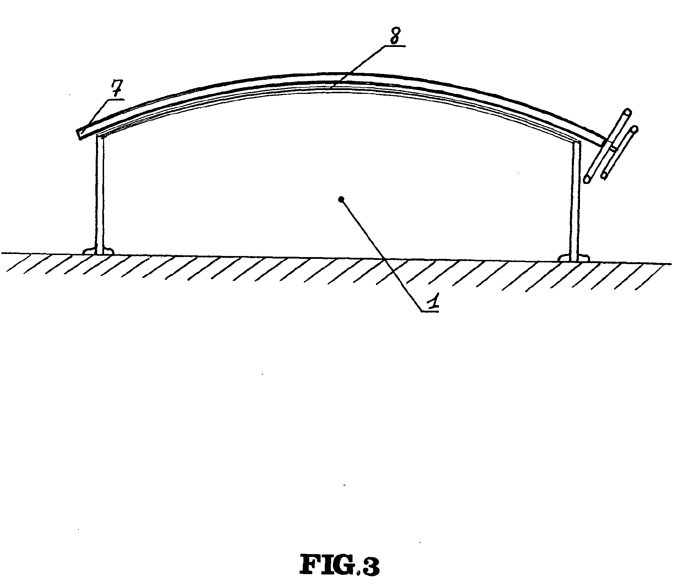

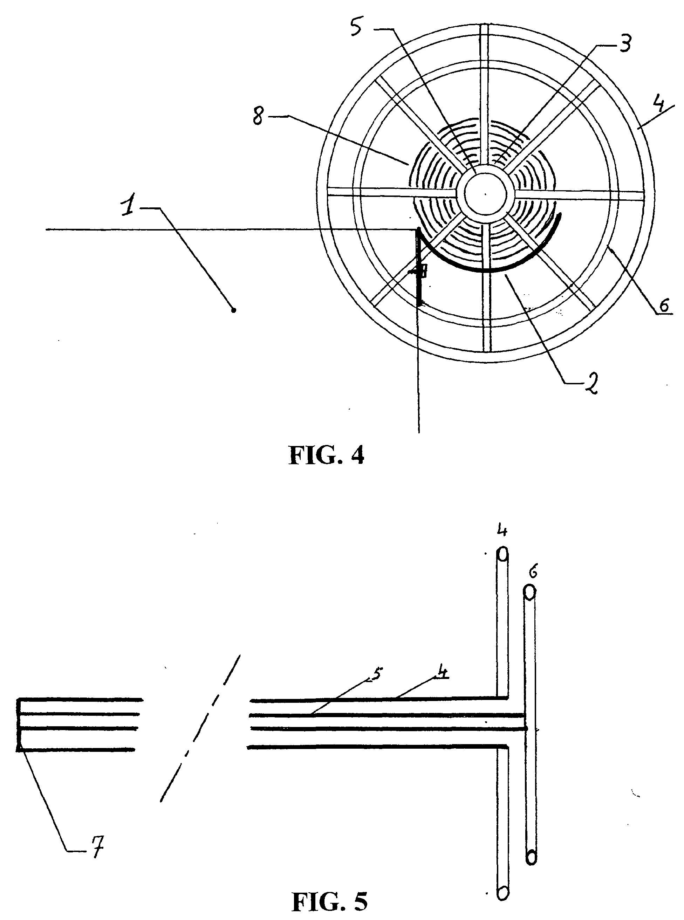

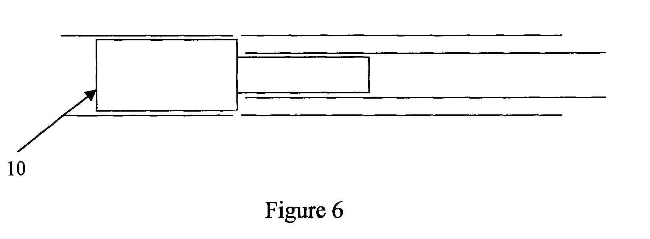

Dans le gros tube vient se loger un autre tube plus petit(12 cm), actionné par le petit volant de 100 cm passant dans le centre du grand volant de 150 cm.
Ces deux volants indépendants l'un de l'autre sont unis ensemble à la partie central du dispositif d'enroulement par un manchon réducteur fig.6 qui permet par inversement ou avancement de la petite roue de remettre en ligne l'enroulement, des bâches de recouvrement si l'on constate un retard ou une avance d'enroulement, par une action sur le petit volant de 100 cm.

Pour permettre le contrôle d'enroulement, à l'autre extrémité les deux bouts du tube inférieur et supérieur en plastique sont fixé ensemble (collé et boulonné).

Par rotation sur l'un des deux volants, ou les deux ensembles permettent un avancement symétrique des deux extrémités.

Le grand volant est fixé par son centre à l'intérieur du gros tube plastique de 160 mm, le petit volant est fixé par son centre au petit tube plastique de 125 mm de diamètre extérieur, un large jeu entre l'intérieur du gros tube pour permettre l'avance ou le recul à l'autre extrémité sur le mur du silo.
Les deux tubes plastiques doivent prendre la forme supérieure du silo.

Par une simple rotation, en côté du silo, de l'un ou l'autre volant, l'enroulement se fait sans beaucoup de force et beaucoup de propreté jusqu'à la fin du silo. Cet ensemble permet un enroulement du système d'étanchéité à mesure des besoins pour alimenter les animaux.

Arrivé au fond de l'enceinte du silo (sur le mur transversale réunissant les deux murs parallèles), on fait rouler tous le système dans une sorte de panier (2) pour le stockage du système, prêt à être déroulé au prochain remplissage du silo. Système réutilisable pour plusieurs années.

Les dessins annexés illustrent l'invention.
La figure (1) représente en coupe le dispositif de l'invention en attente repos.
La figure (2) représente en coupe le dispositif de l'invention au 2/3 du silo.
La figure (3) représente vue de face le silo et le système.
La figure (4) représente vue de profil les 2 volants en parallèle au repos dans le panier.
La figure (5) représente vue de face les 2 volants fixés chacun sur leur tube plastique d'enroulement.
La figure (6) représente le manchon réducteur (10) qui relie par le centre la petite roue à l'extrémité du système du silo pour permettre une correction à l'enroulement

En référence à ces dessins, le dispositif s'adapte sur les murs (9) de silos d'ensilage (1) à une extrémité, une sorte de panier de réception (2) en attente dans ce panier, un tube plastique (3) de 16 cm fixé au centre du grand volant (4) 150 cm. Dans le gros tube (3), un autre tube plus petit (5) et un autre volant plus petit de 100 cm (6) s'y logent servant d'entraînement à l'autre extrémité (7)

Dans le panier (2), le rouleau du film plastique appelé bâche plastique, enroulée dans l'autre bâche épaisse, fibreuse et lourde (8), en attente pour l'ensilage suivant.

## Revendications

1. Dispositif pour enrouler et dérouler une bande souple de protection sur un tas de nourriture granuleuse (ensilage de maïs ou d'herbe). **Caractérisé en ce qu'**il est constitué de deux tubes souples de sections différentes, l'un intérieur, l'autre extérieur, inséré l'un dans l'autre, solidarisés à une extrémité, et munis à chacune des deux autres extrémités d'un moyen de mise en rotation, par exemple volant, le moyen de protection souple pouvant être enroulé autour du tube le plus extérieur.

2. Dispositif selon la revendication (1) **caractérisé en ce qu'**il comporte un moyen de support sur lequel viennent reposer les deux tubes, en bordure du tas de matières à protéger.

3. Dispositif de stockage d'ensilage **caractérisé en ce qu'**il est formé d'au moins deux parois verticales formant une enceinte et du dispositif selon la revendication (1) celui-ci pouvant être mis en rotation en prenant appui sur les parois pour dérouler une bâche.

4. Dispositif selon la revendication (3) **caractérise en ce que** deux des parois sont opposées et parallèles, et sur lesquelles viennent prendre appui la structure tubulaire, permettant le déroulement de la bâche.

5. Dispositif selon la revendication (4) **caractérisé en ce que** à l'extrémité de l'enceinte une forme de panier, (2) sur toute la largeur, reçoit la structure tubulaire pour la supporter lorsqu'elle n'est pas en phase d'enroulement ou de déroulement ...

6. Dispositif selon la revendication (4) **caractérisé en ce que** la bâche est constituée de deux films plastiques, l'une d'entre elle étant épaisse, fibreuse et lourde (8).

7. Dispositif selon la revendication (2) **caractérisé en ce que** les deux tubes sont solidarisés à leurs extrémités par collage ou boulonnage.

8. Dispositif selon la revendication (7) l'union centrale réductrice permet à la petite roue centrale de faire avancer ou réduire l'enroulement à l'autre extrémité du silo selon l'alignement parallèle à corriger
